# EUROPEAN PATENT APPLICATION

(11) **EP 2 333 509 A1**
(43) Date of publication of application: **15.06.2011**
(21) Application number: 10194087.2
(22) Date of filing: 08.12.2010
(51) Int. Cl.: G01L 7/12, G01L 7/14

(54) **Precision Anaeroid barometer with a capillary tube as a pressure indicator.**

(30) Priority: 08.12.2009 EP 09178275
(71) Applicant: Dingens BG bvba, 3581 Beverlo Beringen (BE)
(72) Inventor: Dingens, Paul, B-3971, Heppen (BE)
(74) Representative: Bird, William Edward

(57) **Abstract**

A barometer comprises a membrane (a), an aneroid (b) coupled to the membrane (a), a reservoir (d), a capillary tube (e) in contact with the reservoir, a liquid (c) in the reservoir and in the capillary tube, and means (i, k), coupled to the aneroid, for calibrating the barometer to the height above sea level. The liquid is in contact with the membrane, so that a variation in air pressure causes a deformation of the membrane due to the variation in the dimensions of the aneroid, and hence a variation in level of the liquid in the capillary tube. The air pressure is determined by reading off the liquid level.

## Description

### Technical field of the invention

The present invention relates to a barometer based on the measurement of air pressure.

### Prior art

Different types of barometers are known in the prior art. ln a first type use is made of a metal bellows or aneroid. The aneroid is compressed by the air pressure, and a spring in the aneroid generates the required counterpressure. lf the air pressure rises the aneroid is further compressed. A transmission mechanism converts the small contractions and expansions of the aneroid to the movement of an indicator needle indicating the air pressure by means of a scale division.

Another type of barometer is the mercury barometer. One of the disadvantages of mercury is its toxicity.

### Summary of the invention

An object of the present invention is to provide a barometer with a high degree of accuracy. This barometer can operate with practically any liquid. Preferably no mercury is used because of its toxicity.

A further object of the invention is to provide a barometer with a high degree of accuracy with means for calibrating to the height above sea level.

According to an embodiment of the present invention a precision barometer is provided, which comprises a membrane, an aneroid connected to the membrane, a reservoir, a capillary tube in contact with the reservoir and a liquid in the reservoir and in the capillary tube. The liquid is in contact with the membrane so that a variation in air pressure due to a variation in the dimensions of the aneroid gives rise to a deformation of the membrane and hence a variation in the level of the liquid in the capillary tube. The air pressure can be determined by reading off the liquid level.

The precision barometer preferably comprises a system for calibrating the barometer to the height above sea level.

The reference numbers used below refer to the attached drawings. Other features, characteristics and advantages of the present invention will become evident from the detailed description given below together with the attached figures which illustrate, by way of example, the principles of the invention.

### Brief description of the figures

Fig. 1 shows different views of one embodiment of the invention.
Fig. 2 shows a detail of the embodiment according to Fig. 1.
Fig. 3 shows a component of one embodiment of the invention, which comprises a system for calibrating the barometer to the height above sea level.
Fig. 4 shows an elevated view of the embodiment in Fig. 3.

ln he figures the same reference numbers refer to identical or similar elements.

### Embodiments

The present invention will be described on the basis of certain embodiments and with reference to certain figures. However, the invention is not limited to this but it is limited only by the scope of protection of the claims. The figures are only diagrammatic and are not limiting. In the figures the dimensions of some elements can be enlarged and not drawn to scale for illustrative purposes. The dimensions and relative dimensions do not necessarily coincide with the actual dimensions of real embodiments.

Numerous dimensions are described and reproduced in the accompanying description. However, it is clear that the invention can be implemented without these specific details. ln other cases well known methods, structures, elements and the like are not shown so as not to render the description unnecessarily unclear in the light of the invention.

The invention will now be described on the basis of a detailed description of different embodiments of the invention. It is clear that other embodiments can be configured according to the knowledge of the person skilled in the art. The invention is limited only by the wording of the accompanying claims.

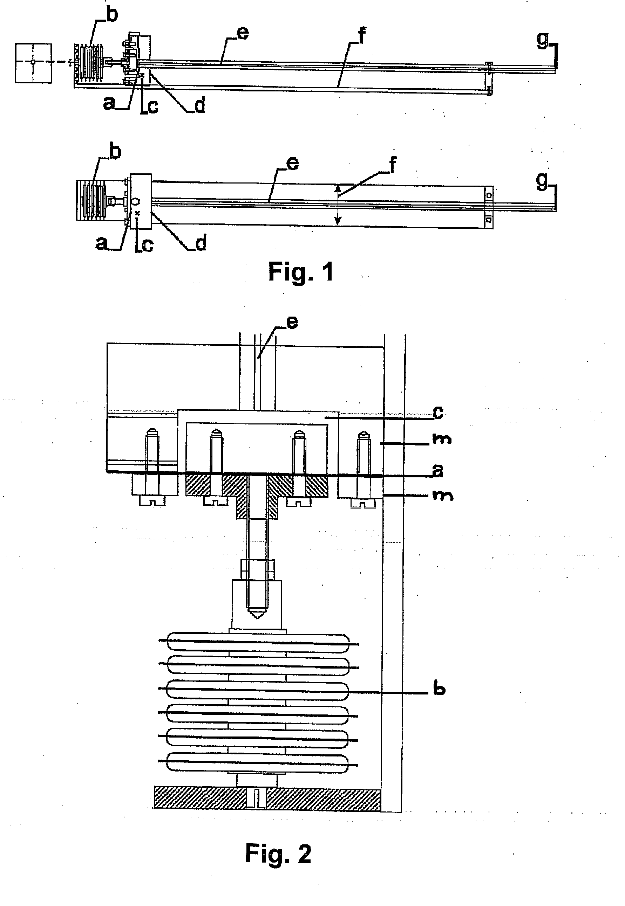

Fig. 1 shows an embodiment of a precision barometer according to the invention. The operation of this embodiment can best be explained using Fig. 2, a detail of the embodiment shown in Fig. 1.

By reducing or increasing the air pressure the aneroids (b) expand or contract. The aneroids (b) are coupled to a membrane (a) which is deformed by the movement of the aneroids. The membrane is in contact with a liquid (c) which is present in reservoir (d) and in capillary tube (e), which is in contact with the reservoir. If the membrane in Fig. 2 is forced upwards by the aneroids, more liquid is forced out of the reservoir and into the capillary tube, and the liquid level in the capillary tube rises. A gradated scale (f) is provided along the capillary tube (e) (see Fig. 1), from which the value of the air pressure can be read off. Almost any liquid (c) can be used; in a particular embodiment the liquid is oil. ln the embodiment shown in Fig. 2 the membrane (a) is fixed by a system of rings (m), e.g. of plastic or metal. The membrane can be made from metal, plastic or other flexible material.

Capillary tube (e) preferably has a diameter which is small in respect to the dimensions of the reservoir. The membrane then displaces a relatively large quantity of liquid from the reservoir into the relatively narrow capillary tube so that a minor deformation of the membrane gives rise to a considerable difference in the level of the liquid in the capillary tube, thus enabling the air pressure to be accurately read off. The reservoir may take any form whatsoever; if it is cylindrical, at least locally, and has a diameter, the diameter of the capillary tube should then preferably be smaller than the diameter of the reservoir. The reservoir may be manufactured from plastic and/or metal, and may also be integrated into the capillary tube.

One end of the capillary tube is in contact with the reservoir. The other end (g) may be open or closed. ln a first embodiment the end (g) of the capillary tube is open, and liquid (c) is therefore in contact with the air. In such a case a liquid should be preferably be chosen which evaporates as little as possible under the operating conditions of the barometer, which expands as little as possible with temperature variation and which generally influences the measurement as little as possible. In another embodiment end (g) of the capillary tube is closed; in this case a small quantity of air should preferably be in the closed end (g). In yet another embodiment end (g) of the capillary tube is closed and it contains no air; a liquid (c) should then preferably be used with a saturation, pressure of approximately 1 bar.

Aneroids (b) may be used in different combinations; they can be mounted vertically and/or horizontally, in series (as in Figs. 1 and 2) and/or in parallel. They may be coupled to the membrane by means of a mechanical transmission system. Depending on the coupling, they may, for example, exert a tensile force or a compressive force on the membrane.

In the embodiment illustrated by Figs. 1 and 2 a number of aneroids (b) are used in series and are coupled by a mechanical transmission system to membrane (a). Preferably at least two aneroids are used. This has the advantage that a capillary tube with a larger diameter can be used, which reduces the influence of tolerances in the tube diameter and of capillarity effects, and hence makes higher accuracy possible. Since if multiple aneroids (see Fig. 2) are used, a given air pressure variation causes greater deformation of the membrane and hence (if the diameter of the capillary tube does not change) a greater difference in the level of the liquid. As explained above, the capillary tube should preferably have a diameter which is small in respect to the dimensions of the reservoir, but a too small tube diameter also has disadvantages. With decreasing tube diameter, the influence of tolerances on the tube diameter and of capillary effects increases, and these have a detrimental effect on accuracy. Therefore two or more aneroids should preferably be used, preferably in series, so that at a given air pressure difference more liquid is displaced, thus enabling a capillary tube with a larger diameter to be used, which results in greater accuracy.

In a particular embodiment the capillary tube does not have the same diameter throughout its length. Nor does the tube need to have a circular cross-section.

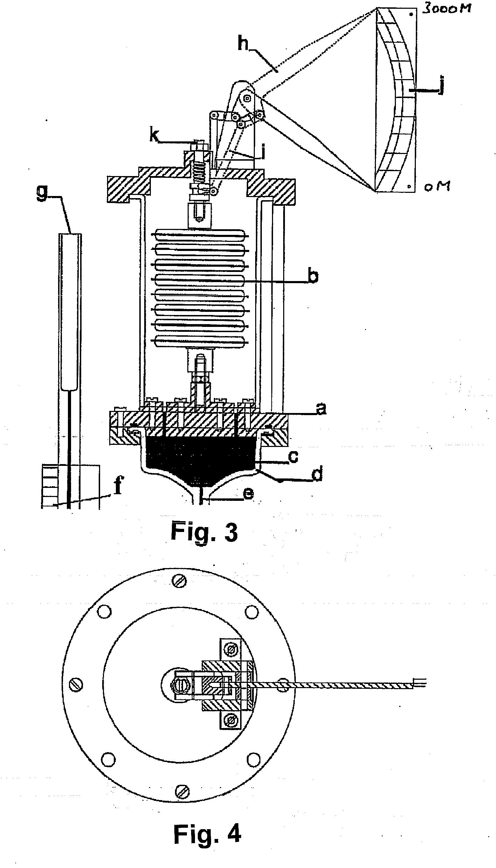

The barometer may be provided with the means for calibrating to the height above sea level. This is illustrated by the embodiment in Fig. 3 and in Fig. 4, which show an elevated view of the embodiment shownin Fig. 3.

If the barometer is used at a greater height above sea level, the air pressure drops. As a result the aneroids (b) expand more. The aneroids (b) can be moved up or down by rotating set screw (k), to compensate for the height above sea level.

The calibration may then be performed as follows. By rotating set screw (k), lever (i) moves and indicator needle (h) indicates a value on the height scale (j).The embodiment in Fig. 3 is so designed that the user only needs to rotate set screw (k) until the correct height at which the barometer is to operate is set on the height scale (j).

Therefore considerable height differences can be adjusted for with one simple instrument.

Instead of the embodiment in Fig. 3, other means can of course be used for calibrating to the height above sea level. Instead of a set screw, another mechanical system known to the person skilled in the art can be used to displace the aneroids, or to exert a force on the aneroids, thus compensating for the air pressure difference resulting from the changed height above sea level.

The barometer can of course also be calibrated to heights below sea level.

ln the embodiment shown in Fig. 3 the capillary tube is U-shaped instead of straight, as in Fig. 1; in the case of a U-shaped tube a tube with a longer length can be used. The capillary tube may also be helical in shape or have another shape known to the person skilled in the art.

Although the invention is described with reference to specific embodiments, it will be clear to the person skilled in the art that various changes and adaptations in shape and detail are possible without deviating from the scope of protection of the claims of the present invention.

## Claims

1. A precision barometer comprising:
- a membrane (a);
- an aneroid (b) coupled to the membrane (a);
- a reservoir (d);
- a capillary tube (e) in contact with the reservoir;
- a liquid (c) in the reservoir and in the capillary tube;
- means (i, k),coupled to the aneroid, for calibrating the precision barometer to the height above sea level;
wherein the liquid is in contact with the membrane so that a variation in air pressure due to a variation in the dimensions of the aneroid causes a deformation of the membrane and hence a variation in the level of the liquid in the capillary tube.

2. The precision barometer according to Claim 1, wherein these means comprise a set screw (k) and a lever (i) for calibration.

3. The precision barometer according to Claim 2, wherein the membrane (a) has a first and a second side opposite the first side, and wherein the aneroid (b) is located on the first side of the membrane and the liquid (c) makes contact with the second side of the membrane.

4. The precision barometer according to any one of the preceding claims, comprising at least two aneroids (b).

5. The precision barometer according to Claim 4, wherein the at least two aneroids (b) are connected to each other in series.

6. The precision barometer according to any one of the preceding claims, wherein the capillary tube (e) has a straight shape.

7. The precision barometer according to any one of Claims 1 to 5, wherein the capillary tube (e) has a U-shape.

8. The precision barometer according to any one of the preceding claims, wherein the reservoir (d) has a reservoir diameter and the capillary tube (e) has a tube diameter, and wherein the tube diameter is smaller than the reservoir diameter.
